# EUROPÄISCHE PATENTSCHRIFT

(11) **EP 1 577 577 B1**
(45) Veröffentlichungstag und Bekanntmachung des Hinweises auf die Patenterteilung: **14.05.2008**
(21) Anmeldenummer: 05004874.3
(22) Anmeldetag: 05.03.2005
(51) Int. Cl.: F16D 33/18, F16D 9/02

(54) **Schmelzsicherung für eine hydrodynamische Kupplung**
Fuse for hydrodynamical coupling
Fusible pour embrayage hydrodynamique

(30) Priorität: 15.03.2004 DE 102004012736
(43) Veröffentlichungstag der Anmeldung: 21.09.2005
(73) Patentinhaber: A. FRIEDR. FLENDER AG, 46395 Bocholt (DE)
(72) Erfinder: Mallmann, Hans-Joachim, 48653 Coesfeld (DE); Gödde, Peter, Dr., 46286 Dorsten (DE); Kleinewegen, Helmut, 46397 Bocholt (DE)
(74) Vertreter: Radünz, Ingo

(56) Entgegenhaltungen:
- DE-U- 1 956 134
- US-A- 3 388 552
- US-A- 3 399 532
- US-A- 5 398 794

## Beschreibung

Die Erfindung betrifft eine Schmelzsicherung für eine hydrodynamische Kupplung mit den Merkmalen des Oberbegriffes des Anspruches 1. Eine derartige Schmelzsicherung ist aus US-3399532 bekannt.

Die bekannte hydrodynamische Kupplung, auch Föttinger Kupplung oder Strömungskupplung genannt, verbindet zwei rotierende Maschinenwellen. Sie überträgt das Drehmoment von der Antriebswelle zur Abtriebswelle über eine in der Kupplung eingeschlossene Flüssigkeitsfüllung. Die Flüssigkeitsfüllung bildet in den beschaufelten Rädern der Kupplung eine Kreislaufströmung aus, die mittels Impuls das Drehmoment vom angetriebenen Pumpenlaufrad zum getriebenen Turbinenlaufrad überträgt.

Zur Ausbildung der Kreislaufströmung ist eine Drehzahldifferenz zwischen Antriebs- und Abtriebsrad notwendig. Diese Drehzahldifferenz wird allgemein als Schlupf bezeichnet. Beim Anfahren oder bei kurzzeitigen besonderen Betriebszuständen kann der Schlupf sehr hoch sein, ohne dass das übertragende Drehmoment unzulässig hohe Werte annimmt. Der gesamte Antriebstrang kann so auf das maximal übertragbare Drehmoment der hydrodynamischen Kupplung hin dimensioniert werden.

Die Verlustleistung der Kupplung, die sich aus dem Produkt von Drehmoment und Schlupf ergibt, entsteht primär als Wärme in der Betriebsflüssigkeit und muss über das Kupplungsgehäuse abgeführt werden. Die Erwärmung der Kupplung beim Anfahren oder bei besonderen Betriebszuständen ist zulässig, solange diese Zustände nicht langandauernd oder in enger zeitlichen Abfolge auftreten. Falls diese besonderen Betriebszustände jedoch häufig hintereinander oder langandauernd auftreten, kann die Temperatur der Flüssigkeitsfüllung und die des Kupplungsgehäuses stark ansteigen.

Zur Absicherung dieser Betriebszustände ist die hydrodynamische Kupplung in der Regel mit mindestens einer sogenannten Schmelzsicherungsschraube ausgeführt. Die Schmelzsicherungsschraube öffnet bei einer festgelegten Ansprechtemperatur das Kupplungsgehäuse, so dass die Flüssigkeitsfüllung entweichen kann. Ohne Flüssigkeitsfüllung kann die hydrodynamische Kupplung kein Drehmoment übertragen, so dass in Folge auch keine weitere Verlustleistung entstehen kann.

Die bekannten Schmelzsicherungsschrauben bestehen aus einem äußeren Schraubenkörper, der ein Gewinde und eine Dichtfläche trägt und einem Kern, der als Schmelzpfropfen ausgeführt ist. Dieser ist aus einem Werkstoff hergestellt, der beim Überschreiten der Ansprechtemperatur seine Festigkeitseigenschaften ändert, so dass eine Öffnung des Kupplungsgehäuses zur Umgebung entsteht.

Um eine genügend große Öffnung bereitzustellen, wird der Schmelzpfropfen mit einem möglichst großen Querschnittsfläche ausgeführt. Um dem Fliehkraftdruck der Flüssigkeitsfüllung sicher standzuhalten, ist der Schmelzpfropfen in einer ausreichenden Dicke auszuführen. Damit entsteht ein vergleichsweise großes Kernvolumen, das nur an einer Stirnfläche den direkten Kontakt zur heißen Betriebsflüssigkeit hat. Die weiteren Flächen des Schmelzpfropfens bilden Kontaktflächen zur Umgebung oder zum Schraubenkörper, der in das Kupplungsgehäuse eingeschraubt ist.

Bei relativ langsamer Erwärmung der Betriebsflüssigkeit ist die Differenztemperatur zwischen Betriebsflüssigkeit und Kupplungsgehäuse gering, so dass der vorgesehene Ansprechpunkt der Schmelzsicherung ausreichend genau eingehalten werden kann. Bei Betriebszuständen, bei denen in relativ kurzer Zeit die Erwärmung der Betriebsflüssigkeit erfolgt, kann, bedingt durch die Kühlwirkung der Umgebung und des Kupplungsgehäuse bzw. des Schraubenkörpers, die vorgesehene Ansprechtemperatur nicht eingehalten werden. Zudem ist das gesamte Kernvolumen aufzuheizen, wozu ein Zeitintervall benötigt wird. Die Schmelzsicherungsschraube dieser Ausführung spricht daher zu spät, oder bei einer zu hohen Temperatur der Betriebsflüssigkeit an. Insbesondere vor dem Hintergrund der Beurteilung der Kupplung für den Einsatz in explosionsfähiger Umgebung muss dieser Umstand negativ gewertet werden.

Der Erfindung liegt die Aufgabe zugrunde, die gattungsgemäße Schmelzsicherung derart auszuführen, dass auch bei relativ rascher Erwärmung der Betriebsflüssigkeit der hydrodynamischen Kupplung die vorgesehene Ansprechtemperatur der Schmelzsicherung eingehalten werden kann.

Die Aufgabe wird bei einer gattungsgemäßen Schmelzsicherung durch die kennzeichnenden Merkmale des Anspruches 1 gelöst. Vorteilhafte Ausgestaltungen der Erfindung sind Gegenstand der Unteransprüche.

Durch die Einfügung der Schicht geringerer Wärmeleitfähigkeit wird die Wärmeleitung zu dem Kupplungsgehäuse behindert, so dass sich der aufschmelzbare Pfropfen schneller der Temperatur der Betriebsflüssigkeit anpassen kann. Zudem kann die Masse des aufschmelzenden Pfropfens reduziert werden, wodurch das Verhältnis zwischen der Kontaktfläche des aufschmelzbaren Pfropfens zu dessen Masse vergrößert wird. Auf diese Weise wird eine Schmelzsicherung geschaffen, die genauer die Ansprechtemperatur mit einer sehr viel schnelleren Ansprechzeit erreicht. Insbesondere für den Einsatz in explosionsgefährdeten Bereichen darf die maximale Oberflächentemperatur der Kupplung und die Temperatur der austretenden Flüssigkeitsfüllung einen kritischen Wert nicht überschreiten. Durch die erfindungsgemäße Gestaltung der Schmelzsicherung wird ein günstiges Ansprechverhalten bei rascher Temperatursteigerung der Flüssigkeitsfüllung erzielt. Der aufschmelzbare Pfropfen kann daher mit einer relativ hohen Ansprechtemperatur ausgeführt sein, wodurch ein vorzeitiges Ansprechen bei langsamer Temperatursteigerung vermieden wird.

Mehrere Ausführungsbeispiele der Erfindung sind in der Zeichnung dargestellt und werden im Folgenden näher erläutert. Es zeigen:
- Fig. 1: den Längsschnitt durch eine hydrodynamische Kupplung,
- Fig. 2: eine Schmelzsicherung nach dem Stand der Technik für eine hydrodynamische Kupplung gemäß Fig. 1
- Fig. 3: die Draufsicht auf Fig. 2 und
- Fig. 4: bis 6 verschiedene Ausführungsformen einer erfindungsgemäßen Schmelzsicherung für eine hydrodynamische Kupplung gemäß Fig. 1.

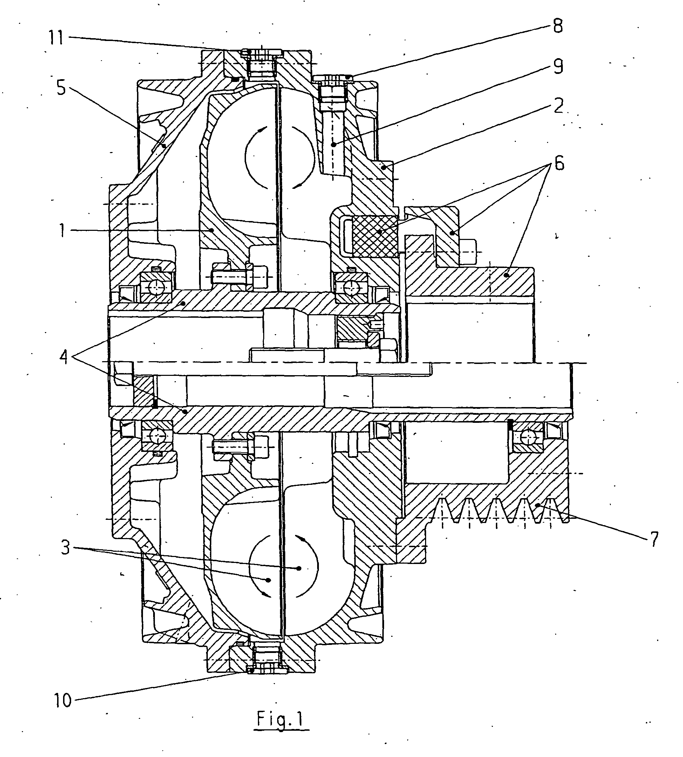

Die hydrodynamische Kupplung nach Fig. 1 besteht aus einem Pumpen- oder Innenrad 1 und aus einem Turbinen- oder Außenrad 2, die durch einen engen Spalt voneinander getrennt sind. Jedes der beiden Räder besitzt einen Halbringraum 3 mit radial verlaufenden Schaufeln, die spiegelbildlich zueinander angeordnet sind. Das Innenrad 1 ist auf einer Hohlwelle 4 befestigt, die von einem nicht gezeigten Motor angetrieben ist. Das Außenrad 2 ist mit einem das Innenrad 1 umschließenden Deckel 5 verbunden und bildet zusammen mit dem Deckel 5 das Kupplungsgehäuse der hydrodynamische Kupplung. An dem Außenrad 2 ist als Verbindung zu einer nicht gezeigten Arbeitsmaschine eine elastische Kupplung 6 (oberer Teil der Fig. 1) oder eine Keilriemenscheibe 7 (unterer Teil der Fig. 1) befestigt, die auf einer Verlängerung der Hohlwelle 4 gelagert ist.

Im Inneren der Kupplung befindet sich Öl oder Wasser als Betriebsflüssigkeit, die solange in einem durch die Pfeile in Fig.1 angedeuteten Strömungskreislauf gehalten ist, wie das Innenrad 1 und das Außenrad 2 unterschiedliche Drehzahlen aufweisen. Bei gleicher Drehzahl von Innenrad 1 und Außenrad 2 kommt der Flüssigkeitsstrom zum Stillstand.

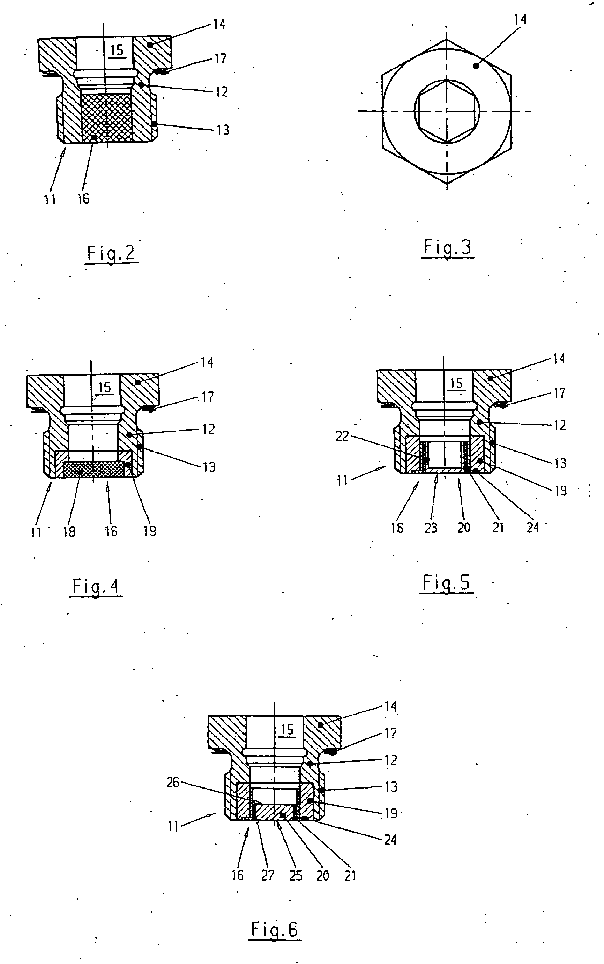

Das Kupplungsgehäuse ist mit einem durch eine Einfüllschraube 8 gesicherten Einfüllkanal 9, eine Verschlussschraube 10 und eine Schmelzsicherung 11 versehen. Diese Schmelzsicherung 11 wird im Folgenden an Hand der Fig. 2 bis 6 näher beschrieben.

Die Schmelzsicherung 11 besteht aus einem Schraubenkörper 12 mit einem Gewinde 13 und einen sechseckigen Kopf 14 und ist in das Kupplungsgehäuse eingeschraubt. Der Schraubenkörper 12 ist aus einem metallischen Werkstoff gefertigt und weist eine Durchgangsbohrung 15 auf. Der dem Inneren der Kupplung zugewandte Eingangsbereich der Durchgangsbohrung 15 ist einen aufschmelzbaren Pfropfen 16 verschlossen. Zusammen mit einem Dichtring 17, der unterhalb des Kopfes 14 den Schaft des Schraubenkörpers 12 umschließt, dichtet der aufschmelzbare Pfropfen 16 das Innere des Kupplungsgehäuses gegenüber der Umgebung ab. Der aufschmelzbarer Pfropfen 16 ist aus einem Werkstoff gefertigt, der bei einer vorgegebenen Temperatur schmilzt. Hat die mit dem aufschmelzbarer Pfropfen 16 in Kontakt kommende Betriebsflüssigkeit diese Ansprechtemperatur erreicht, ändert der aufschmelzbarer Pfropfen 16 seine Festigkeitseigenschaften und gibt die Durchgangsbohrung 15 des Schraubenkörpers 12 frei, so dass die Bertiebsflüssigkeit austreten kann. Gemäß dem in Fig. 2 gezeigten Stand der Technik ist der aufschmelzbare Pfropfen 16 direkt in den Schraubenkörper 12 eingesetzt und steht mit diesem in einem gut wärmeleitenden Kontakt.

Gemäß Fig. 4 ist der aufschmelzbare Pfropfen 16 als Schmelzplatte 18 ausgebildet, deren in Längsrichtung der Durchgangsbohrung 15 sich erstreckende Dicke geringer ist als der Durchmesser der Durchgangsbohrung 15. Die Schmelzplatte 18 weist damit eine vergleichsweise geringe Höhe bei einer vergleichsweise großen Fläche an dem Kontaktbereich zur Betriebsflüssigkeit auf. Die Schmelzplatte 18 ist in einen wärmeisolierenden Werkstoff, das heißt in einen Werkstoff eingebunden, dessen Wärmeleitfähigkeit geringer ist als die des Schraubenkörpers 12 oder des Kupplungsgehäuses. Als Werkstoff kommt z. B. Kunststoff zur Anwendung. Aus diesem Werkstoff geringerer Wärmeleitfähigkeit ist eine Schicht in der Form einer Hülse 19 gefertigt, die in die Durchgangsbohrung 15 eingesetzt und mit dem Schraubenkörper 12 verbunden ist.

Das Einbinden der Schmelzplatte 18 in die Hülse 19 aus dem Werkstoff geringerer Wärmeleitfähigkeit kann durch Kleben oder andere bekannte Verfahren zur Herstellung einer dauerhaften Verbindung erreicht werden. Neben dieser Verbindung kann die Hülse 19 mit einer Eindrehung versehen sein, an der sich die Schmelzplatte 18 abstützt. Da diese formschlüssige Verbindung die Schmelzplatte 18 sehr viel besser fixiert als die rein stoffschlüssige Verbindung des aufschmelzbaren Pfropfens 16 und des Schraubenkörpers 12, kann die Höhe der Schmelzplatte 18 sehr viel geringer gewählt werden als Höhe des aufschmelzbaren Pfropfens 16 gemäß dem Stand der Technik (Fig. 2).

Die große Kontaktfläche der Schmelzplatte 18 zur Betriebsflüssigkeit der hydrodynamischen Kupplung zusammen mit der vergleichsweise geringen Masse der Schmelzplatte 18 führen in der beschriebenen wärmeisolierten Ausführung zu einer Schmelzsicherung 11 mit einer sehr viel schnellerer Ansprechzeit.

Der Schraubenkörper 12 selbst kann alternativ aus einem wärmeisolierenden Werkstoff, das heißt aus einem Werkstoff hergestellt sein, dessen Wärmeleitfähigkeit geringer ist als die des Kupplungsgehäuses. In diesem Fall ist die Schmelzplatte 18 direkt in den gegenüber dem Kupplungsgehäuse wärmeisolierten Schraubenkörper 12 eingebracht.

Gemäß Fig. 5 besteht der die Durchgangsbohrung 15 verschließbare Pfropfen 16 aus einem Kern 20 in Verbindung mit einer stoffschlüssigen Verbindungsschicht 21, über die der Kern 20 auf die nachfolgend beschriebene Weise mit dem Schraubenkörper 12 verbunden wird. Diese Verbindungsschicht 21 besteht aus Schmelzlot und stellt den eigentlichen aufschmelzbaren Pfropfen 16 dar. Der Kern 20 besteht aus einem gut wärmeleitenden Material mit unveränderten Festigkeitseigenschaften über den hier betrachteten Temperaturbereich, z. B. wie das Kupplungsgehäuse aus einem metallischen Werkstoff. Die Wärmeleitfähigkeit des Kernes 20 entspricht der des Kupplungsgehäuses. Der Kern 20 ist gemäß Fig. 5 als stirnseitig geschlossener Hohlzylinder 22 ausgebildet, dessen Außendurchmesser geringer ist als der Innendurchmesser der Durchgangsbohrung 15 und dessen geschlossene Stirnseite 23 auf der dem Inneren der Kupplung zugewandten Seite mit dem Schraubenkörper 12 abschließt. Dieser Kern 20 ist über die als aufschmelzbarer Pfropfen 16 dienende Verbindungsschicht 21 aus Schmelzlot mit einer zylindrischen Buchse 24 verbunden. Die Buchse 24 ist in die Hülse 19 aus dem Werkstoff geringerer Wärmeleitfähigkeit eingebunden. Alternativ kann der Kern 20 über die Verbindungsschicht 21 direkt mit dem Schraubenkörper 12 werden, falls der Schraubenkörper 12 aus einem Werkstoff gefertigt ist, dessen Wärmeleitfähigkeit geringer ist als die des Kupplungsgehäuses.

Die in Fig. 6 gezeigte Schmelzsicherung 11 entspricht weitgehend der Schmelzsicherung gemäß Fig. 5. Es ist lediglich der Kern 20 anders ausgebildet und besteht aus einem Kugelabschnitt mit einer mit dem Eingangsbereich der Durchgangsbohrung 15 abschließenden, runden Grundfläche 25, mit einer zu der Grundfläche 25 parallelen, runden Deckfläche 26 und mit einer einer Kugelfläche folgenden Seitenfläche 27. Die sich über die Höhe ändernden Spaltbreite zwischen dem als Kugelabschnitt ausgebildeten Kern 20 und der ihn umgebenden zylindrischen Buchse 24 lässt sich eine verbesserte Verbindungsschicht 21 aus Schmelzlot herstellen. In einer derartigen Ausführung kann die Schmelzsicherung 11 auch druckbegrenzend wirken, um z. B. das Bersten des Kupplungsgehäuses aufgrund eines zu hohen Innendrucks zu verhindern. Die mechanische Festigkeit der stoffschlüssigen, als aufschmelzbarer Pfropfen 16 dienenden Verbindungsschicht 21 aus Schmelzlot ist dann gerade so groß gewählt, dass für den vorgesehenen Zustand mit zulässigem Druck und zulässiger Temperatur die Schmelzsicherung 11 zuverlässig abdichtet und erst beim Überschreiten der Ansprechtemperatur oder des Ansprechdrucks die Durchgangsbohrung 15 des Schraubenkörpers 12 durch Versagen der Verbindungsschicht 21 der Schmelzsicherung 11 freigegeben wird.

## Patentansprüche

1. Schmelzsicherung für eine hydrodynamische Kupplung mit einem eine Betriebsflüssigkeit aufnehmenden Kupplungsgehäuse, wobei die Schmelzsicherung (11) aus einem bei einer vorgegebenen Temperatur aufschmelzbaren Pfropfen (16) besteht, der in einen in das Kupplungsgehäuse einschraubbaren und mit einer Durchgangsbohrung (15) versehenen Schraubenkörper (12) eingesetzt ist, der die Durchgangsbohrung (15) des Schraubenkörpers (12) verschließt und der den mit der Betriebssflüssigkeit gefüllten Innenraum der Kupplung gegenüber der Umgebung abdichtet, **dadurch gekennzeichnet, dass** der aufschmelzbaren Pfropfen (16) von einer Schicht (19) umgeben ist, deren Wärmeleitfähigkeit geringer ist als die des Schraubenkörpers (12) oder des Kupplungsgehäuses.

2. Schmelzsicherung nach Anspruch 1, **dadurch gekennzeichnet, dass** der Pfropfen (16) aus einer Schmelzplatte (18) besteht, deren Dicke geringer ist als der Durchmesser der Durchgangsbohrung (15) des Schraubenkörpers (12):

3. Schmelzsicherung nach Anspruch 2, **dadurch gekennzeichnet, dass** die Schmelzplatte (18) formschlüssig in der Schicht (19) geringerer Wärmeleitfähigkeit gehalten ist.

4. Schmelzsicherung nach Anspruch 2, **dadurch gekennzeichnet, dass** die Schmelzplatte (18) stoffschlüssig in der Schicht 19) geringerer Wärmeleitfähigkeit gehalten ist.

5. Schmelzsicherung nach einem der Ansprüche 1 bis 4, **dadurch gekennzeichnet, dass** die Durchgangsbohrung (15) des Schraubenkörpers (12) durch einen Kern (20) verschließbar ist, dessen Wärmeleitfähigkeit etwa der des Kupplungsgehäuses entspricht und dass der aufschmelzbare Pfropfen (16) als stoffschlüssige Verbindungsschicht (21) zwischen dem Kern (20) und der Schicht (19) geringerer Wärmeleitfähigkeit ausgebildet ist.

6. Schmelzsicherung nach einem der Ansprüche 1 bis 4, **dadurch gekennzeichnet, dass** die Durchgangsbohrung (15) des Schraubenkörpers (12) durch einen Kern (20) verschließbar ist, dessen Wärmeleitfähigkeit etwa der des Kupplungsgehäuses entspricht und dass der aufschmelzbare Pfropfen (16) als stoffschlüssige Verbindungsschicht (21) zwischen dem Kern (20) und einer Buchse (24) ausgebildet ist, die in die Schicht (19) geringerer Wärmeleitfähigkeit eingebunden ist.

7. Schmelzsicherung nach Anspruch 5 oder 6, **dadurch gekennzeichnet, dass** die Breite des Kernes (20) sich in Längsrichtung der Durchgangsbohrung (15) ändert und dass der sich erweitende und verengende Zwischenraum zwischen dem Kern (20) und der zylindrischen Schicht (19) geringerer Wärmeleitfähigkeit mit dem aufschmelzbaren Pfropfen (16) ausgefüllt ist.

8. Schmelzsicherung nach Anspruch 7, **dadurch gekennzeichnet, dass** der Kern (20) als Kugelabschnitt mit zwei parallelen runden Flächen (25, 26) und einer einer Kugelfläche folgenden Seitenfläche (27) ausgebildet ist.

9. Schmelzsicherung nach einem der Ansprüche 1 bis 8, **dadurch gekennzeichnet, dass** der Schraubenkörper (12) eine geringere Wärmleitfähigkeit als die des Kupplungsgehäuses aufweist und dass der aufschmelzbare Pfropfen (16) direkt in den Schraubenkörper (12) eingesetzt ist.

## Claims

1. Fuse for a hydrodynamic coupling with a coupling housing receiving an operating liquid, wherein the fuse (11) consists of a plug (16), which is meltable at a predetermined temperature and which is inserted into a screw body (12) screwable into the coupling housing and provided with a passage bore (15), which plug closes the passage bore (15) of the screw body (12) and seals off the interior space, which is filled with the operating liquid, of the coupling relative to the environment, **characterised in that** the meltable plug (16) is surrounded by a layer (19) having a thermal conductivity less than that of the screw body (12) or of the coupling housing.

2. Fuse according to claim 1, **characterised in that** the plug (16) consists of a melt plate (18), the thickness of which is less than the diameter of the passage bore (15) of the screw body (12).

3. Fuse according to claim 2, **characterised in that** the melt plate (18) is mechanically positively retained in the layer (19) of lower thermal conductivity.

4. Fuse according to claim 2, **characterised in that** the melt plate (18) is retained by material couple in the layer (19) of lower thermal conductivity.

5. Fuse according to one of claims 1 to 4, **characterised in that** the passage bore (15) of the screw body (12) is closable by a core (20), the thermal conductivity of which approximately corresponds with that of the coupling housing, and that the meltable plug (16) is constructed as a material-coupled connecting layer (21), between the core (20) and the layer (19) of lower thermal conductivity.

6. Fuse according to one of claims 1 to 4, **characterised in that** the passage bore (15) of the screw body (12) is closable by a core (20), the thermal conductivity of which approximately corresponds with that of the coupling housing, and that the meltable plug (16) is constructed as a material-coupled connecting layer (21), between the core (20) and a bush (24), which is incorporated in the layer (19) of lower thermal conductivity.

7. Fuse according to claim 5 of 6, **characterised in that** the width of the core (20) changes in longitudinal direction of the passage bore (15) and that the widening and narrowing intermediate space between the core (20) and the cylindrical layer (19) of lower thermal conductivity is filled out by the meltable plug (16).

8. Fuse according to claim 7, **characterised in that** the core (20) is constructed as a ball section with two parallel round surfaces (25, 26) and a side surface (27) following a ball surface.

9. Fuse according to one of claims 1 to 8, **characterised in that** the screw body (12) has a lower thermal conductivity than that of the coupling housing and that the meltable plug (16) is inserted directly into the screw body (12).

## Revendications

1. Fusible pour un accouplement hydrodynamique avec une boîte d'accouplement recevant un liquide de service, le fusible (11) étant constitué d'un tampon (16) capable de fondre à une température donnée, qui est inséré dans un corps de vis (12) vissable dans la boîte d'accouplement et pourvu d'un trou traversant (15), qui obture le trou traversant (15) du corps de vis (12) et qui assure l'étanchéité de l'espace intérieur de l'accouplement rempli de liquide de service par rapport à l'environnement, **caractérisé en ce que** le tampon (16) capable de fondre est entouré d'une couche (19) dont la conductivité thermique est inférieure à celle du corps de vis (12) ou de la boîte d'accouplement.

2. Fusible, selon la revendication 1, **caractérisé en ce que** le tampon (16) est constitué d'une plaque de fusion (18) dont l'épaisseur est inférieure au diamètre du trou traversant (15) du corps de vis (12).

3. Fusible selon la revendication 2, **caractérisé en ce que** la plaque de fusion (18) est maintenue par conjugaison de formes dans la couche (19) de conductivité thermique inférieure.

4. Fusible selon la revendication 2, **caractérisé en ce que** la plaque de fusion (18) est maintenue par conjugaison de matières dans la couche (19) de conductivité thermique inférieure.

5. Fusible selon l'une des revendications 1 à 4, **caractérisé en ce que** le trou traversant (15) du corps de vis (12) peut être obturé par un noyau (20), dont la conductivité thermique correspond sensiblement à celle de la boîte d'accouplement et que le tampon (16) capable de fondre est réalisé sous forme de couche de liaison (21) à conjugaison de matières entre le noyau (20) et la couche (19) de conductivité thermique inférieure.

6. Fusible selon l'une des revendications 1 à 4, **caractérisé en ce que** le trou traversant (15) du corps de vis (12) peut être obturé par un noyau (20), dont la conductivité thermique correspond sensiblement à celle de la boîte d'accouplement et que le tampon (16) capable de fondre est réalisé sous forme de couche de liaison (21) à conjugaison de matières entre le noyau (20) et une douille (24) qui est enchâssée dans la couche (19) de conductivité thermique inférieure.

7. Fusible selon la revendication 5 ou 6, **caractérisé en ce que** la largeur du noyau (20) varie dans la direction longitudinale du trou traversant (15) et que l'interstice s'élargissant et se rétrécissant situé entre le noyau (20) et la couche cylindrique (19) de conductivité thermique inférieure est rempli par le tampon (16) capable de fondre.

8. Fusible selon la revendication 7, **caractérisé en ce que** le bouchon (20) est réalisé sous forme de section sphérique avec deux surfaces rondes (25, 26) parallèles et une surface latérale (27) suivant une surface sphérique.

9. Fusible selon l'une des revendications 1 à 8, **caractérisé en ce que** le corps de vis (12) présente une conductivité thermique inférieure à celle de la boîte d'accouplement et que le tampon (16) capable de fondre est inséré directement dans le corps de vis (12).
